# EUROPEAN PATENT SPECIFICATION

(11) **EP 1 486 354 B1**
(45) Date of publication and mention of the grant of the patent: **22.08.2007**
(21) Application number: 04013013.0
(22) Date of filing: 02.06.2004
(51) Int. Cl.: B60C 9/22

(54) **Radial tire**
Radialer Reifen
Pneumatique radial

(30) Priority: 12.06.2003 JP 2003168168
(43) Date of publication of application: 15.12.2004
(73) Proprietor: Sumitomo Rubber Industries, Ltd., Kobe-shi, Hyogo-ken (JP)
(72) Inventor: Miyazaki, Shinichi Sumitomo Rubber Indust. Ltd, Kobe-shi Hyogo-ken (JP)
(74) Representative: Manitz, Finsterwald & Partner GbR

(56) References cited:
- EP-A- 1 097 824
- EP-A- 1 209 008
- EP-A- 1 270 270

## Description

### BACKGROUND OF THE INVENTION

### Field of the Invention

The present invention relates to a radial tire that is particularly suitable for use in motorcycles and that is capable of improving tire durability and steering stability.

### Prior Art

Radial tires for use in motorcycles in which band layers with band cords of organic fiber being spirally wound around along a circumferential direction of tires are disposed outside of carcasses of radial structure are suggested in, for instance, Japanese Patent Laid-Open Publication No. 4-278805 (1992) or Japanese Patent Laid-Open Publication No. 7-96710 (1995).

In radial tires for motorcycles employing organic fiber cords as band cords, it is being attempted to use material of high elasticity such as aramid. However, since the extension of cords are large, effects of restricting uplifting of tread portions when the tires are performing high-speed rotation (so-called a lifting phenomenon) are not sufficient. Drawbacks were thus exhibited that disadvantages in steering stability were found and that deflected wear was apt to occur. In view of those facts, radial tires for motorcycles employing steel cords as the band cords were suggested in, for instance, Japanese Patent Laid-Open Publication No. 4-362402 (1992) or Japanese Patent Laid-Open Publication No. 7-96712 (1995).

In the Japanese Patent Laid-Open Publication No. 4-362402, there is recited a band cord that is obtained by twining three shaped metallic wires. However, when employing metallic wires having a wire diameter of approximately 0.15 mm, it is generally the case that it is apt to lack in bending strength and that there is still room for improvements in durability and wear resistance. The suggested steel cords of 3 by 3 arrangement require complicated twining processes so that costs are increased.

In the Japanese Patent Laid-Open Publication No. 7-96712, there is described a metallic cord as a band cord in which sheaths comprised of one to four metallic wires are twined around a core comprised of one or two metallic wires. However, such a metallic cord will have a large cord diameter and permeability of rubber into the area between the metallic wires is insufficient. It is therefore likely that the cords become rusty and that degradation in bonding power between the cords and rubber, degradation in the strength of the cords or cutting of cords is caused through the spread of such rust. Moreover, since a load-extension curve of such a cord is determined depending on the shape of the core, the extension characteristic of the cords is apt to become unstable. Particularly in case a large extension is to be obtained, it will be necessary to set the shape of the core to be large, which makes the configuration of the cords unstable.

EP 1270 270 discloses a tire comprising a band layer having a band cord made of steel filaments twisted together, wherein the steel filaments includes two-dimensional zigzag waved filament.

### SUMMARY OF THE INVENTION

The present invention has been made in view of the above cases, and it is an object thereof to provide a radial tire that is particularly suitable for use in motorcycles and in which the durability and steering stability has been further improved by improving band cords.

The present invention is a radial tire comprising a carcass that extends from a tread portion over sidewall portions up to bead cores of bead portions, and a band layer disposed outside the carcass in the tread portion wherein,
the band layer is formed of a band ply in which a band cord is wound around in a spiral manner along a circumferential direction of the tire,
the band cord comprises total nine metallic wires including at least five shaped wires, and is formed by twining two to four wire bundles composed of a plurality of said metallic wires twined while twisting each wire thereof,
each shaped wire is formed in a two-dimensional shape with repeated peaks and troughs in a condition prior to the twisting, and
the metallic wires of each wire bundle are revolved around the center of the wire bundle while rotating on its own axis through the twining.

### BRIEF DESCRIPTION OF THE DRAWINGS

Fig. 1 is a sectional view of a radial tire for motorcycles illustrating an embodiment of the present invention;
Fig. 2 is a partial perspective view illustrating one example of a belt-like ply;
Fig. 3 is a sectional view illustrating one example of a band cord;
Fig. 4 is a plan view illustrating one example of a shaped wire;
Fig. 5 is a diagram illustrating a basic structure of a twining machine in conceptual form;
Fig. 6(A) is a diagram illustrating a wire bundle that is formed by twining metallic wires while twisting each wire thereof, and Fig. 6 (B) is a diagram illustrating a wire bundle formed by twining metallic wires without twisting each wire thereof; and
Fig. 7 is a plan view for explaining processes of forming a band cord.

### DESCRIPTION OF THE PREFERRED EMBODIMENTS

An embodiment of the present invention will now be explained on the basis of the drawings.

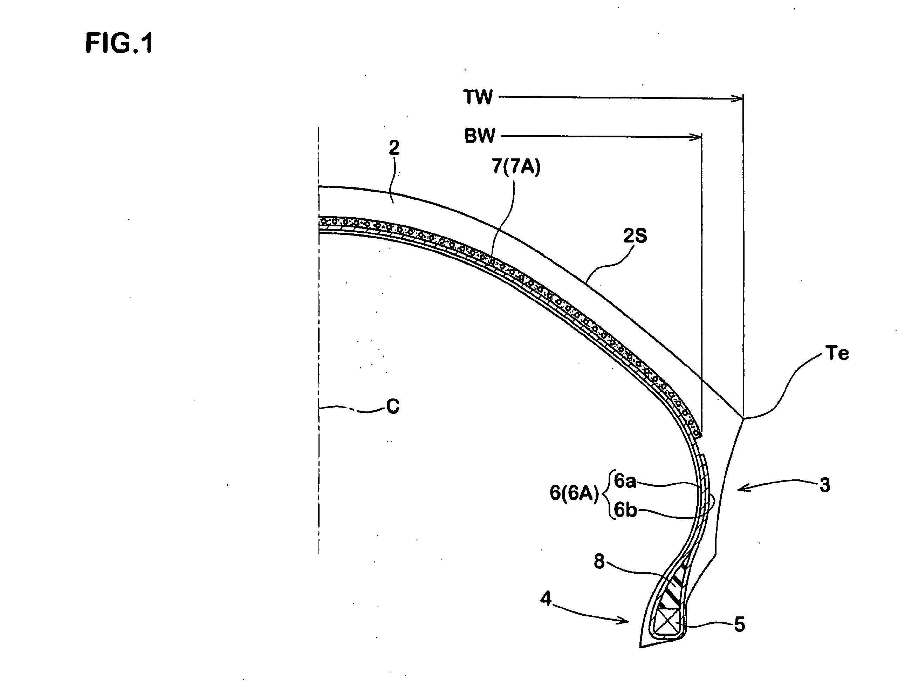

Fig. 1 is a sectional view in which the radial tire of the present invention is a radial tire for motorcycles.

In the drawing, a radial tire 1 for motorcycles comprises a tread portion 2 in which tread surface 2S curves in an arc-like manner, a pair of sidewall portions 3 that extends radially inward from both ends of the tread portion 2, and bead portions 4 that are located at radially inner ends of the respective sidewall portions 3. In the tire 1, a tread width TW, a tire axial distance between tread ends Te, Te, is a maximum width of the tire.

The tire 1 also comprises a carcass 6 that extends from the tread portion 2 over the sidewall portions 3 to bead cores 5 of the bead portions 4 and a band layer 7 that is disposed outside of the carcass 6 in the tread portion 2. In the present example, the carcass 6 and the band layer 7 form a frame portion of the tire.

The carcass 6 comprises more than one (wherein one is employed in the present example) carcass ply 6A in which carcass cords are aligned at an angle of 70 to 90°, and preferably 80 to 90°, with respect to the peripheral direction of the tire. Favorably used carcass cords may be organic fiber cords such as nylon, polyester, rayon or aromatic polyamide. The carcass ply 6A is integrally formed with ply turnup portions 6b that are turned up from inside to outside of the bead cores 5 and secured on each end of a main body portion 6a extended between the bead cores 5, 5, forming a toroidal shape. A bead apex rubber 8 that extends from the bead cores 5 to radially outward in a tapered manner is disposed between the main body portion 6a and the turnup portions 6b. With this arrangement, regions extending from the bead portions 4 to the sidewall portions 3 are reinforced.

The band layer 7 is comprised of more than one (wherein one is employed in the present example) carcass ply 7A that is obtained by spirally winding band cords along the tire circumferential direction. In the present example, the band layer 7 is directly formed outside of the carcass 6, while it is also possible to provide a band layer 9 with a belt layer (not shown) being interposed between when the tire is for use in passenger cars.

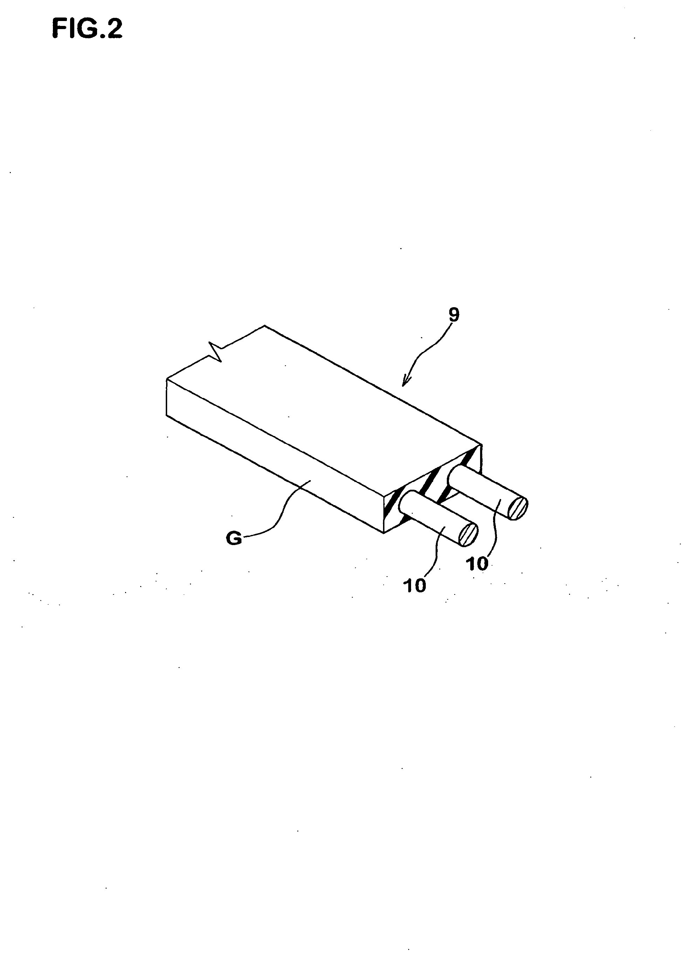

In the present example, the band ply 7A is formed by using a belt-like ply 9 as will be described below. As illustrated in Fig. 2, the belt-like ply 9 assumes an elongated belt-like shape of small width in which one band cord 10, preferably a plurality number thereof are embedded into a topping rubber G in a parallel manner. This belt-like ply 9 is spirally wound outside of the carcass 6 to thereby form the band ply 7A. In this respect, the band ply 7A may assume various forms beside the case in which a single belt-like ply 10 is spirally wound in a successive manner from one end side of the tread end Te to the other end side, and may alternatively be arranged in that two belt-like plies 10, 10 are spirally wound from proximate of the tire equator C towards respective tread ends Te on both sides.

A band width BW, which represents an axial width of the band ply 7A, is preferably set to, for instance, approximately 80 to 95% of the tread width TW. When the band width BW is less than 80% of the tread width TW, it is impossible to obtain a sufficient rigidity at proximate of the tread end Te so that, for instance, no sufficient camber thrust can be generated upon application of a large camber angle so that turning properties tend to be degraded. On the other hand, when it becomes larger than 95%, the outer end of the band ply 7A will approach the tread end Te so that peeling from the rubber and other defects are apt to occur.

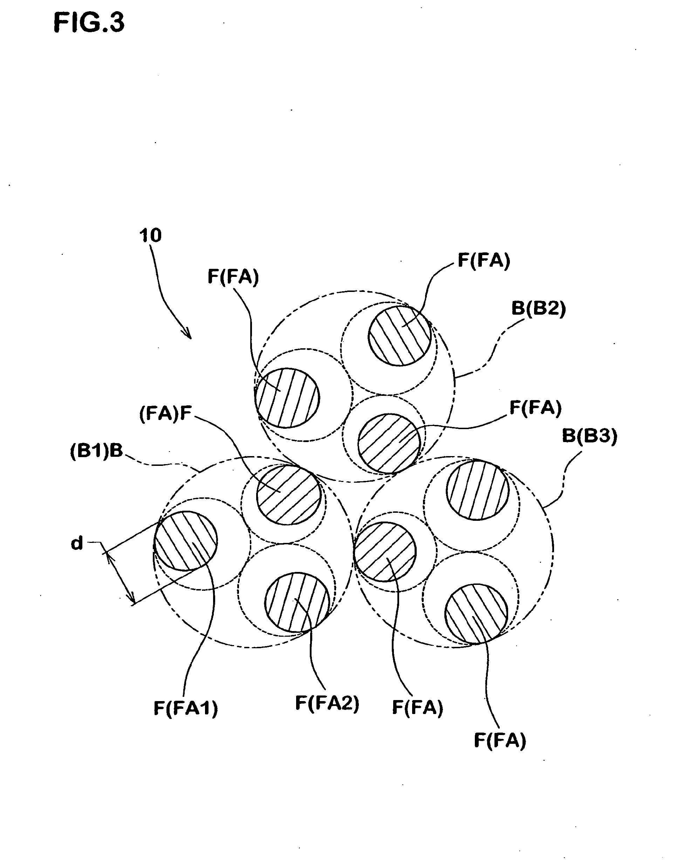

The band cord 10, whose cross-sectional surface is illustrated in Fig. 3, is formed by twining two to four wire bundles B, which have been formed by twisting a plurality of metallic wires F while twisting each wire thereof. At this time, the total number of metallic wires F forming the band cord 10 will be nine, including at least five shaped wires FA, wherein each of the shaped wires FA is formed in a two-dimensional wave-like shape in which peaks and troughs are repeated in a condition prior to twisting.

Such a band cord 10 prevents overlapping of waves of the shapes employing wire bundles B which have been bundled upon preliminarily performing twisting at long pitches so as to make the cord diameter compact and enables forming of large airspaces between metallic wires F, F. With this arrangement, the permeability of the topping rubber to inside of the cord will be increased to effectively prevent occurrence and expansion of rust, and high adhesive power between the metallic wires F and the rubber can be maintained over a long period of time. It is accordingly possible to remarkably improve the durability of the band ply 7A, and consequently the durability of the tire. Since the band cord 10 is formed by twining wire bundles B that have been obtained by twisting metallic wires F, the wire bundles B that have been applied with twist will function as resistances against extension of the cords. Accordingly, the band cords 10 will be restricted in extensibility while being of open structure, and they exhibit large constraining force with respect to lifting at the time when the tire performs high-speed running for reliably restricting the same. The steering stability can thus be improved as well.

As for the metallic wires F, it is preferable to employ a hard steel wire material having a carbon content of, for instance, 0.65 to 0.88 wt%, and more preferably, 0.70 to 0.88 wt%. When the carbon content of the metallic wires F falls below 0.65%, the strength of the wires tends to degrade, and on the other hand, when it exceeds 0.88 wt%, the hardness of the wires will be too high so that degradations in strength when forming shapes will tend to be large. In this respect, it is possible to perform surface treatments (plating) using metal or resin for the purpose of improving the adhesive power with rubber compositions.

While not particularly limited, the wire diameter d of the metallic wires F shall desirably be 0.15 to 0.2 mm. When the wire diameter d is less than 0.15 mm, the rigidity tends to be insufficient as band cords of radial tires when using nine wires. On the other hand, when the wire diameter d is larger than 0.20 mm, the rigidity of the band cord 10 will be excess so that the steering stability and riding comfort tends to be worsened. While the present embodiment illustrates a case in which all metallic wires F forming the band cord 10 are of the same wire diameter d, it is possible to make metallic wires F of different wire diameters within the above range coexist.

While one to four of the nine metallic wires F may be non-shaped wires (not shown) in the band cord 10, it is preferable that all of the nine metallic wires F are shaped wires FA therein.

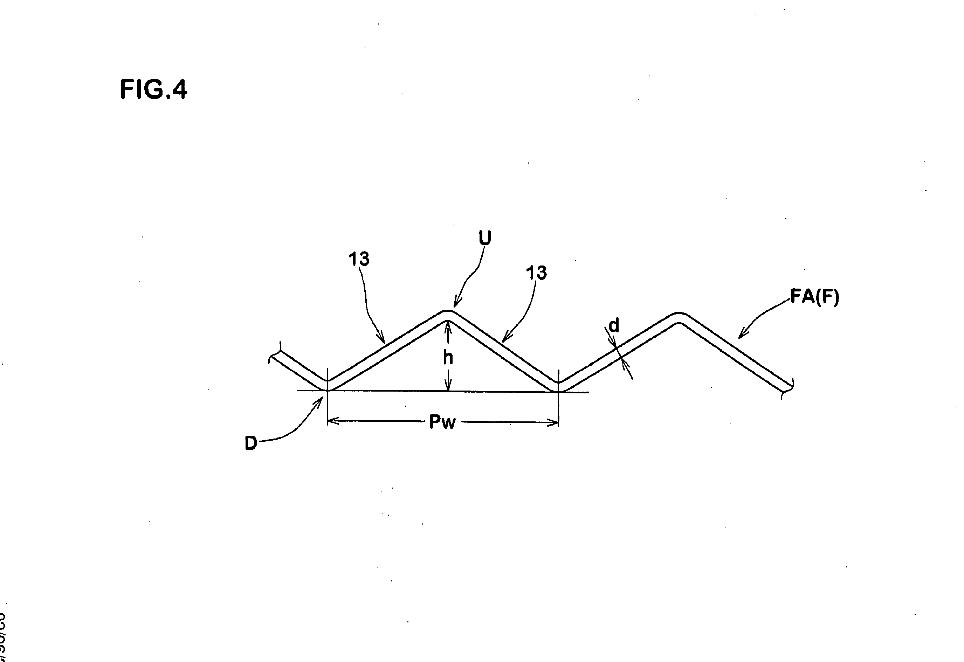

Fig. 4 illustrates a condition of a shaped wire FA prior to twisting as in a planar form. The shaped wire FA includes a two-dimensional wave-like shape in which peaks U and troughs D of waves are alternately repeated. Two-dimensional shapes can be easier processed when compared to three-dimensional, for instance, spiral-like shapes, and clearances between wires F, F can be easily formed and serve to secure a sufficient permeability of rubber to the interior of the cord even when the wave heights h are relatively small. Also in case a plurality of wires F is included, it serves to form the clearances while achieving a compact cord diameter for improving the rubber permeability. The present example illustrates a zigzag-like example in which a straight portion 13 is interposed between a peak U and a trough D. This serves to further improve the permeability of rubber to the interior of the cords. It is also possible to employ sine waveforms in which the peaks U and troughs D are connected through smooth curve portions.

It is desirable that the shaped wires FA is formed with a wave pitch Pw of 1 to 5 mm and a wave height h of 0.18 to 0.65 mm. As illustrated in Fig. 4, the wave pitch Pw is measured from peak-to-peak of the peaks U or the troughs D, while the wave height h is measured as a right-angled distance between a peak U and a trough D. When the wave pitch Pw is less than 1 mm, damages that the metallic wires F receive at the time of processing the shapes will be large so that the strength of the wires may be degraded. On the other hand, when it becomes larger than 5 mm, the permeability of rubber tends to be degraded. When the wave height h is less than 0.18 mm, it will be difficult to secure permeability of rubber. On the other hand, when it is larger than 0.65 mm, the cord diameter will become large and damages that the shaped wires FA receive at the time of processing the shapes will be large, which may lead to degradations in strengths of the wires.

The shaped wires FA preferably include two or more types of shaped wires FA1, FA2 whose wave pitches Pw and/or wave heights h differ. This advantageously serves to achieve shifts in phases and heights of waves when performing twining of a relatively large number of metallic wires F (namely, nine) and consequently to improve the permeability of rubber within the cords.

The number of metallic wires F forming a single wire bundle B is preferably two to five, and more preferably two to four. While the number of wire bundles B forming a single band cord 10 is in the range of two to four, it is preferably three. Fig. 3 illustrates an example in which a band cord 10 is formed by twining three wire bundles B1 to B3. In this respect, each of the wire bundles B1 to B3 is formed of three metallic wires F. Table 1 illustrates structures of the band cord 10 of the present invention, wherein the structures of cord No. 5 and No. 6 are particularly preferable.

**Table 1**

| Band cord structure | | | | | | | |
|---|---|---|---|---|---|---|---|
| Number of wire bundles | No. | Number of wires included in a wire bundle | | | | | |
| 2 | | Wire bundle B1 | | | Wire bundle B2 | | |
| | 1 | 2 | | | 7 | | |
| | 2 | 3 | | | 6 | | |
| | 3 | 4 | | | 5 | | |
| 3 | | Wire bundle B1 | | Wire bundle B2 | | Wire bundle B3 | |
| | 4 | 2 | | 2 | | 5 | |
| | 5 | 2 | | 3 | | 4 | |
| | 6 | 3 | | 3 | | 3 | |
| 4 | | Wire bundle B1 | Wire bundle B2 | | Wire bundle B3 | | Wire bundle B4 |
| | 7 | 2 | 2 | | 2 | | 3 |

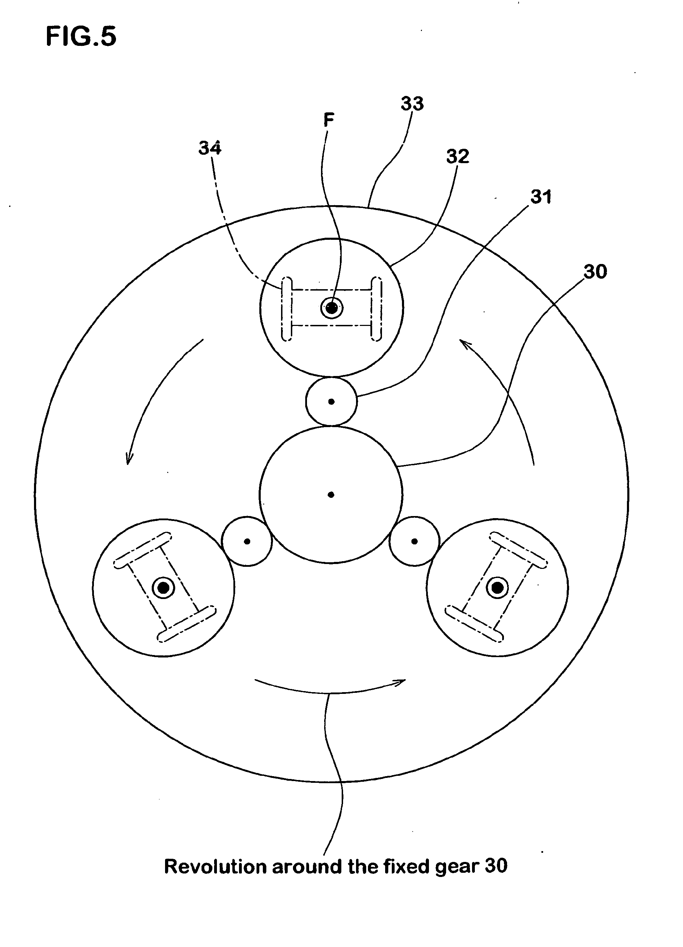

The difference between conventional "twining" and "twining while twisting each wire" applied in the present invention will now be explained. Fig. 5 illustrates a basic structure of a twining machine for manufacturing cords in conceptual form. Reference numeral 30 is a fixed gear that does not rotate, and reference numerals 31, 32 are planetary gears that are mounted to a rotating disk 33 so that they may go around the fixed gear 30 together with the rotating disk 33. The metallic wires F are held by bobbins 34 that are provided on the respective planetary gears 32. The metallic wires F will be wound back from the respective bobbins 34 accompanying the rotation of the rotating disk 33 so that the respective metallic wires F are twined to be tied into a single strand or a cord.

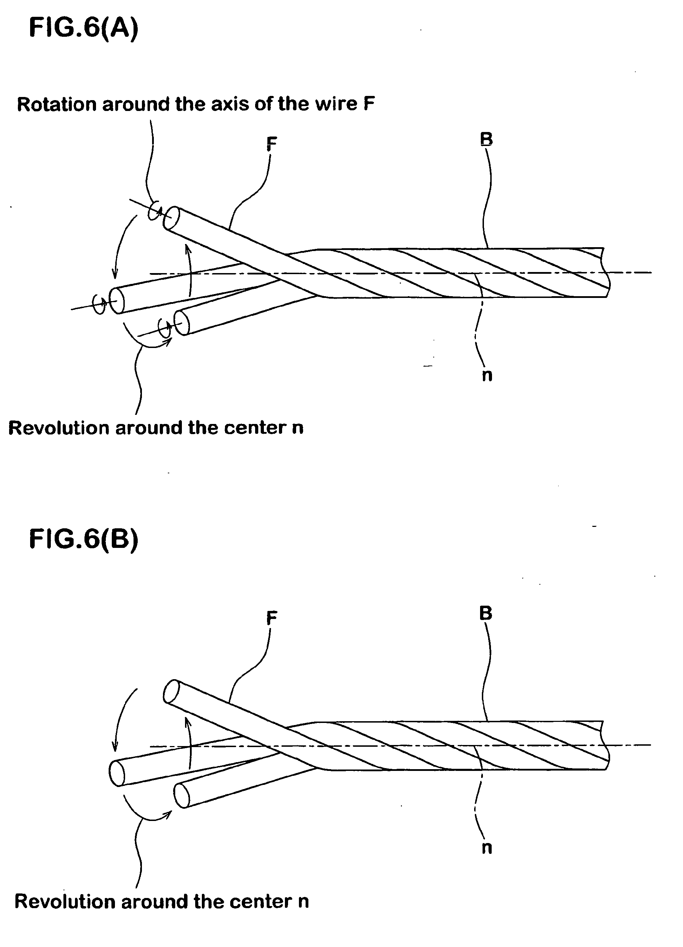

At this time, since the number of gears of the fixed gear 30 and that of the planetary gears 32 are identical, the planetary gears 32 will revolve around the fixed gear 30 without rotating on their own axes. Accordingly, while performing conventional "twining", the metallic wires F of the wire bundle B will revolve around a center n of the wire bundle B without rotating on their own axes as illustrated in Fig. 6(B).

In contrast thereto, in performing "twining while twisting each wire" of the present invention, the number of gears of the fixed gear 30 and that of the planetary gears 32 is, for instance, made different so that a twist is applied to the respective metallic wires F when performing twining. Thus, the metallic wires F of the wire bundle B will be revolved around the center n of the wire bundle B while rotating around their own axes as illustrated in Fig. 6 (A). This is similar that the earth revolves both on its own axis and around the Sun.

Through the above-mentioned rotation around their own axes, which are not found in the conventional "twining", the two-dimensional shape of the shaped wires FA is changed into a complicated three-dimensional shape. With this arrangement, the wire bundle B is compactly bundled while securing large clearances between the metallic wires F, F. The twist pitch Pf when performing twisting is preferably set to be extremely large, namely three to twenty times the final twine pitch Pc.

When the twist pitch Pf is less than three times than the final twine pitch Pc, untwining torque that acts to feaze the wire bundle B will become large so that the shape retention consequently tends to be worsened (for instance, feazing of the band cord 10 is apt to occur). On the other hand, when it exceeds twenty times, the twist pitch Pf will be remarkably large so that the wire bundle B becomes large-sized and is apt to feazing. Shapes of respective shaped wires FA, FA are also apt to be overlapped in the wire bundle B.

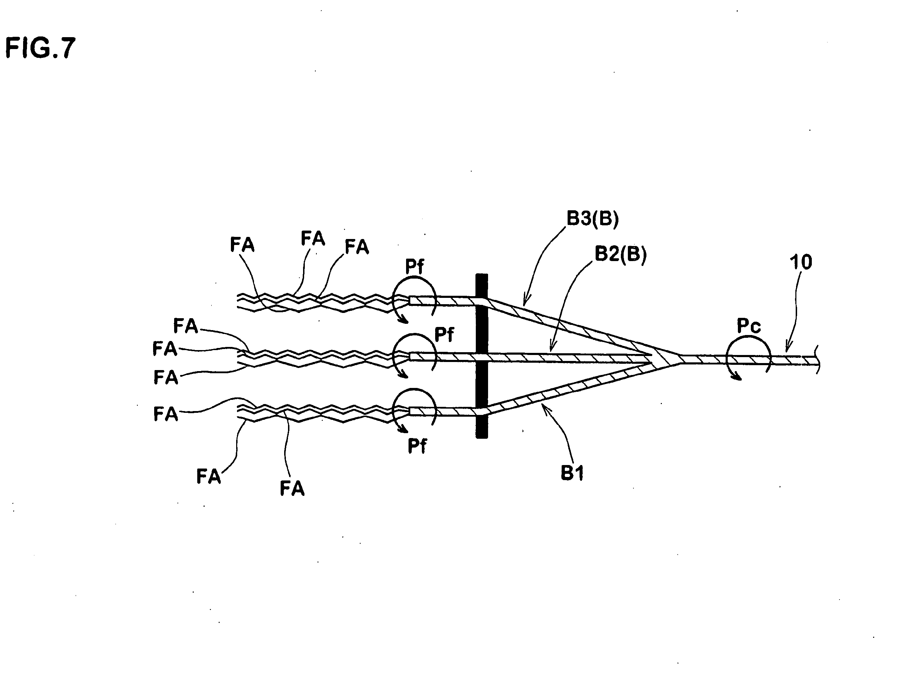

As illustrated in Fig. 7, the wire bundles B1 to B3 are twined at a final twine pitch Pc of preferably 5 to 20 mm for forming the band cord 10. When the twine pitch Pc becomes less than 5 mm, the strength tends to be degraded and on the other hand, when it exceeds 20 mm, the permeability of rubber tends to be inferior. The present embodiment is arranged in that the twisting direction and the final twining direction for forming the wire bundle B are made to identical directions in the band cord 10. Alternatively, they may be opposite directions. Such a case will function to balance the untwining torque of the cord 10 and to stabilize the shape of the cord.

While a particularly preferred embodiment of the present invention has so far been explained in details, the present invention is not to be limited to the illustrated embodiment alone, and it may be executed upon modifying the same into various forms, for instance, upon application thereof to band layers of tires for automobiles.

### Examples

For confirming the effects of the present invention, various metallic cords have been sampled according to the specifications of Table 2, and comparisons and evaluations of characteristics of sample cords and of performances of radial tires for motorcycles when the sample cords were used as band cords have been performed.

In this respect, the radial tires for motorcycles comprise the basic structure as illustrated in Fig. 1 wherein only the band cords were differed. Common specifications were such that the tire size was 180/55ZR17 and such that the carcass was comprised of a single carcass ply in which carcass cords of nylon 66 (1400 dtex/2) were aligned at 90° with respect to the tire equator. In this respect, the number of implanted carcass cords was 38 (one per each 5 cm) at positions inside of the bead core. The band layer was formed by spirally winding a belt-like ply outside of the carcass in each of the sample tire.

Test methods were as follows.

### <Permeability of Rubber>

Radial tires for motorcycles comprising a band ply utilizing sample metallic cords were manufactured, and band cords taken out from the tires were disassembled. It was then observed whether rubber was completely filled between the wires within the band cords, and ratios of lengths of portions at which rubber was filled with respect to observation lengths (10 cm) were defined to be the permeability of rubber. Such measurements were performed for ten cords, and an average value thereof was defined as a measured value of the cords. In this respect, observation was performed by cutting sections of cords by a knife for removing two adjoining wires from among the wires whereupon clearances between the removed two wires and the remaining wires were observed.

### <Hygroscopic High-speed Durability>

Sample tires were left in an atmosphere of high temperature and high humidity (temperature: 70°C, humidity 98% RH) for seven days whereupon durability tests were performed by using a drum running tester. The durability test was performed under conditions of an air pressure of 250 kPa and a load of 2.45 kN, wherein running was started at a velocity of 80 km/H with the velocity being increased by 10 km/H each 24-hour period, and the running distance until the tire was damaged was obtained. Evaluations are displayed using indices with the Comparative Example 2 being 100, and the larger the numeric values are, the more favorable it is.

### <Steering Stability (Stability of Straight-ahead high-speed Running/Sense of Grip of Turning Movements>

Sample tires were mounted as rear tires of a motorcycle having an engine displacement of 750 cm³ and were made to run on paved roads for evaluating stability of straight-ahead high-speed running and sense of grip when performing turning movements through senses of a driver. Evaluations are displayed using indices with the Comparative Example 2 being 100, and the larger the numeric values are, the more favorable it is.

### <Wear-resistance>

The sample vehicle was made to run on a general road, and the running distance required for 1 mm wear of the tread rubber was measured. Evaluations are displayed using indices with the Comparative Example 2 being 100, and the larger the numeric values are, the more favorable it is.

**TABLE 2**

| | | Comparative Example 1 | Comparative Example 2 | Comparative Example 3 | Example 1 | Example 2 |
|---|---|---|---|---|---|---|
| Physicality of cord | Cord material | Aromatic polyamide | Steel | Steel | Steel | Steel |
| | Cord structure | 1670 dtex/2 | 1×5×0.20 *1 | 3×3×0.17 | 1×9×0.17 | 1×9×0.17 |
| | Number of implantation (number/5 cm) | 50 | 38 | 38 | 38 | 38 |
| | Carbon content (wt%) | - | 0.82 | 0.82 | 0.8:2 | 0.82 |
| | Number of waving (number) | - | - | - | 9 | 9 |
| | Wave pitch Pw (mm) | - | - | - | .1(5) 4.5(3) | 4.0 |
| | Wave height h (mm) | - | - | - | 0.15 (6) 0.25(3) | 0.20 |
| | Twine pitch Pc (mm) *2 | - | 9.0 | 3.0(S) 6.2(0 | 15.0 | 17.0 |
| | Twist pitch Pf (mm) | - | - | - | 105 | 200 |
| | Structure of wire bundle *3 | - | - | 3, 3, 3 | 3, 3, 3 | 4, 3, 2 |
| | Cord diameter (mm) | 0.72 | 0.90 | 1.00 | 0.66 | 0.69 |
| Test results | Permeability of rubber (%) | - | 89 | 91 | 95 | 93 |
| | Stability of straight-ahead high-speed running (index) | 99 | 100 | 102 | 104 | 103 |
| | Sense of grip when performing turning movement (index) | 98 | 100 | 101 | 103 | 103 |
| | Wear resistance (index) | 81 | 100 | 100 | 104 | 103 |
| | Hygroscopic high-speed durability (index) | 101 | 100 | 102 | 105 | 104 |

| | | | | | | |
|---|---|---|---|---|---|---|
| *1 Open structure *2 S: strand C: cord *3 Number of wires included in each wire bundle | | | | | | |

As explained so far, the radial tire according to the present invention is capable of improving the steering stability and durability, and when particularly employing the same as a radial tire for use in motorcycles, it is possible to exhibit extremely favorable stability of straight-ahead high-speed running and sense of grip when performing turning movements.

## Claims

1. A radial tire (1) comprising a carcass (6) that extends from a tread portion (2) over sidewall portions (3) up to bead cores (5) of bead portions (4), and a band layer (7) disposed outside the carcass (6) in the tread portion (2) wherein,
the band layer (7) is formed of a band ply (7A) in which band cords (10) are wound around in a spiral manner along a circumferential direction of the tire,
the band cord (10) comprises total nine metallic wires (F) including at least five shaped wires (FA), and is formed by twining two to four wire bundles (B) composed of a plurality of said metallic wires (F) twined while twisting each wire thereof,
each said shaped wire (FA) is formed in a two-dimensional shape with repeated peaks and troughs in a condition prior to the twisting, and
the metallic wires (F) of each wire bundle (B) are revolved around the center of the wire bundle while rotating on its own axis through the twining.

2. The radial tire as claimed in Claim 1, wherein each said wire bundle comprises a shaped wire.

3. The radial tire as claimed in Claim 1 or 2, wherein a wire diameter d of said metallic wires is 0.15 to 0.20 mm.

4. The radial tire as claimed in any one of Claims 1 to 3, wherein said shaped wire is formed with a wave pitch Pw of 1 to 5 mm and a wave height h of 0.18 to 0.65 mm.

5. The radial tire as claimed in any one of Claims 1 to 4, wherein said band cord is formed with a twine pitch Pc of 5 to 20 mm and said wire bundle is formed with a twist pitch Pf of three to twenty times the twine pitch Pc.

6. The radial tire as claimed in any one of Claims 1 to 5, wherein said wire bundle is composed of two to four metallic wires.

7. The radial tire as claimed in any one of Claims 1 to 6, wherein said wire bundle comprises a plurality of shaped wires different in the wave pitch Pw and/or the wave height h.

8. The radial tire as claimed in any one of Claims 1 to 6, wherein said two-dimensional shape is zigzag.

## Patentansprüche

1. Radialreifen (1), umfassend eine Karkasse (6), die sich von einem Laufflächenabschnitt (2) über Seitenwandabschnitte (3) bis zu Wulstkernen (5) von Wulstabschnitten (4) erstreckt, und eine Bandschicht (7), die außerhalb der Karkasse (6) in dem Laufflächenabschnitt (2) angeordnet ist, wobei
die Bandschicht (7) aus einer Bandlage (7A) gebildet ist, in der Bandkorde (10) spiralförmig entlang einer Reifenumfangsrichtung herumgewickelt sind,
der Bandkord (10) insgesamt neun Metalldrähte (F) mit mindestens fünf geformten Drähten (FA) umfasst und gebildet ist, indem zwei bis vier Drahtbündel (B) verschlungen sind, die aus einer Vielzahl der Metalldrähte (F) bestehen und verschlungen werden, während jeder Draht davon verdreht wird,
jeder geformte Draht (FA) in einer zweidimensionalen Form mit wiederholten Spitzen und Vertiefungen in einem Zustand vor dem Verdrehen gebildet ist und
die Metalldrähte (F) eines jeden Drahtbündels (B) um die Mitte des Drahtbündels gedreht werden, während es sich auf seiner eigenen Achse durch das Verschlingen dreht.

2. Radialreifen nach Anspruch 1, wobei jedes Drahtbündel einen geformten Draht umfasst.

3. Radialreifen nach Anspruch 1 oder 2, wobei ein Drahtdurchmesser d der Metalldrähte 0,15 bis 0,20 mm beträgt.

4. Radialreifen nach einem der Ansprüche 1 bis 3, wobei der geformte Draht mit einer Wellenteilung Pw von 1 bis 5 mm und einer Wellenhöhe h von 0,18 bis 0,65 mm gebildet ist.

5. Radialreifen nach einem der Ansprüche 1 bis 4, wobei der Bandkord mit einer Verschlingungsteilung Pc von 5 bis 20 mm gebildet ist und das Drahtbündel mit einer Verdrehungsteilung Pf gebildet ist, die das Drei- bis Zwanzigfache der Verschlingungsteilung Pc beträgt.

6. Radialreifen nach einem der Ansprüche 1 bis 5, wobei das Drahtbündel aus zwei bis vier Metalldrähten besteht.

7. Radialreifen nach einem der Ansprüche 1 bis 6, wobei das Drahtbündel eine Vielzahl von geformten Drähten umfasst, die sich in der Wellenteilung Pw und/oder der Wellenhöhe h unterscheiden.

8. Radialreifen nach einem der Ansprüche 1 bis 6, wobei die zweidimensionale Form eine Zickzack-Form ist.

## Revendications

1. Bandage radial (1) comprenant une carcasse (6) qui s'étend à partir d'une partie de bande de roulement (2) sur des parties de paroi latérale (3) jusqu'aux tringleries (5) des parties de talon (4), et une couche de bande (7) disposée à l'extérieur de la carcasse (6) dans la partie de bande de roulement (2), dans lequel :
la couche de bande (7) est formée avec un pli de bande (7A) dans lequel des cordes de bande (10) sont enroulées en spirale le long d'une direction circonférentielle du bandage,
la corde de bande (10) comprend un total de neuf fils métalliques (F) comprenant au moins cinq fils façonnés (FA), et est formée en tressant deux à quatre paquets de fils (B) composés d'une pluralité desdits fils métalliques (F) tressés tout en tordant chacun de leurs fils,
chacun desdits fils façonnés (FA) est formé selon une forme bidimensionnelle avec des pics et des creux répétés dans une condition avant la torsade, et
les fils métalliques (F) de chaque paquet de fils (B) sont retournés autour du centre du paquet de fils tout en tournant sur leur propre axe par le biais du tressage.

2. Bandage radial selon la revendication 1, dans lequel chacun desdits paquets de fils comprend un fil façonné.

3. Bandage radial selon la revendication 1 ou 2, dans lequel un diamètre de fil d desdits fils métalliques est de l'ordre de 0,15 à 0,20 mm.

4. Bandage radial selon l'une quelconque des revendications 1 à 3, dans lequel ledit fil façonné est formé avec un écartement d'onde Pw de 1 à 5 mm et une hauteur d'onde h de 0,18 à 0,65 mm.

5. Bandage radial selon l'une quelconque des revendications 1 à 4, dans lequel ladite corde de bande est formée avec un écartement de tresse Pc de 5 à 20 mm et ledit paquet de fils est formé avec un écartement de torsion Pf représentant de trois à vingt fois l'écartement de tresse Pc.

6. Bandage radial selon l'une quelconque des revendications 1 à 5, dans lequel ledit paquet de fils est composé de deux à quatre fils métalliques.

7. Bandage radial selon l'une quelconque des revendications 1 à 6, dans lequel ledit paquet de fils comprend une pluralité de fils façonnés différents dans l'écartement d'onde Pw et/ou la hauteur d'onde h.

8. Bandage radial selon l'une quelconque des revendications 1 à 6, dans lequel ladite forme bidimensionnelle est en zigzag.
